(19)

**Europäisches Patentamt**
**European Patent Office**
**Office européen des brevets**

(11) **EP 4 141 725 A1**

(12) **EUROPEAN PATENT APPLICATION**

(43) Date of publication:
**01.03.2023 Bulletin 2023/09**

(21) Application number: **21306184.9**

(22) Date of filing: **31.08.2021**

(51) International Patent Classification (IPC):
**G06F 30/10** (2020.01)   **G06T 7/62** (2017.01)
**G06T 17/05** (2011.01)   **G06T 19/20** (2011.01)
**G06V 10/44** (2022.01)   **G06V 20/64** (2022.01)
**G06V 30/422** (2022.01)

(52) Cooperative Patent Classification (CPC):
**G06F 30/10; G06F 30/00; G06T 19/20;**
**G06V 10/25; G06V 10/26; G06V 10/457;**
**G06V 20/64;** G06T 2219/2021

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Dassault Systèmes**
**78140 Vélizy-Villacoublay (FR)**

(72) Inventors:
• **Brifault, Lucas**
  **Vélizy-Villacoublay (FR)**
• **State, Serban Alexandru**
  **Vélizy-Villacoublay (FR)**

(74) Representative: **Bandpay & Greuter**
   **30, rue Notre-Dame des Victoires**
   **75002 Paris (FR)**

(54) **CAD VOLUME EXTRUSION OPERATOR DETECTION**

(57)   The disclosure relates to a computer-implemented method for CAD volume extrusion operator detection in a CAD 3D model representing a mechanical part. The method comprises providing a segmentation of the CAD 3D model. The CAD 3D model includes a skin representing an outer surface of the mechanical part. The segmentation comprises segments each representing a skin portion. The method further comprises iteratively grouping segments. Segments of a pair are grouped if: each segment of the pair is an extrusion surface and a union of the segments is an extrusion surface having a same extrusion axis as the segments, or each segment of the pair is an extrusion surface and one of the two segments is a closing plane for the other segment. The method further comprises determining one or more CAD volume extrusion operators, each corresponding to a respective group.

EP 4 141 725 A1

## Description

### TECHNICAL FIELD

The disclosure relates to the field of computer programs and systems, and more specifically to a method, system and program for CAD volume extrusion operator detection.

### BACKGROUND

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

In this context and other contexts, processing CAD 3D models is gaining wide importance.

There is however a need for improved solutions for CAD 3D model processing.

### SUMMARY

It is therefore provided a computer-implemented method for CAD volume extrusion operator detection in a CAD 3D model. The CAD 3D model represents a mechanical part. The method comprises providing a segmentation of the CAD 3D model. The CAD 3D model includes a skin representing an outer surface of the mechanical part. The segmentation comprises segments each representing a skin portion. The method further comprises iteratively grouping segments, where two segments of a pair of segments are grouped if each segment of the pair is an extrusion surface and a union of the two segments is an extrusion surface having a same extrusion axis as the two segments, or if each segment of the pair is an extrusion surface and one of the two segments is a closing plane for the other segment. The method further comprises determining one or more CAD volume extrusion operators. Each CAD volume extrusion operator corresponds to a respective group.

The method may comprise one or more of the following:

- iteratively grouping segments comprises one or more iterations of:

    ◦ exploring a pair of segments;
    ◦ determining whether:

        ▪ a first disparity between the value of an extrusion-detection objective function for the union of the segments of the explored pair and a weighted sum of the values of the extrusion-detection objective function for the segments of the explored pair is lower than a first predefined threshold, the sum being weighted based on the areas of the segments, or
        ▪ a second disparity between the value of an extrusion-closing objective function for the segments of the explored pair and the weighted sum is lower than a second predefined threshold, the extrusion-closing objection function rewarding orthogonality of an input segment with respect to an extrusion axis of another input segment;

    ◦ grouping the segments of the explored pair if the first disparity is lower than the first predefined threshold or if the second disparity is lower than the second predefined threshold;

- the value of the extrusion-detection objective function for an input segment is a smallest eigenvalue of a normal matrix of the input segment;
- the value of the extrusion-closing objective function is a smallest eigenvalue of a matrix that is a weighted sum of a normal matrix of the other input segment and the identity minus a normal matrix of the input segment, the sum being weighted based on the areas of the input segments;
- the first disparity is of the type:

$$\delta(S_1, S_2) = \lambda^m_{S_1 \sqcup S_2} - \frac{\mathcal{A}_{S_1}}{\mathcal{A}_{S_1} + \mathcal{A}_{S_2}} \lambda^m_{S_1} - \frac{\mathcal{A}_{S_2}}{\mathcal{A}_{S_1} + \mathcal{A}_{S_2}} \lambda^m_{S_2},$$

where $S_1$ and $S_2$ are the two segments of the explored pair,

$$\lambda^m_{S_1 \sqcup S_2}$$

is the smallest eigenvalue of the normal matrix $\mathbf{T}_{S_1 \sqcup S_2}$ of the union of $S_1$ and $S_2$, $\lambda^m_{S_1}$ is the smallest eigenvalue of the normal matrix $\mathbf{T}_{S_1}$ of $S_1$, $\lambda^m_{S_2}$ is the smallest eigenvalue of the normal matrix $\mathbf{T}_{S_2}$ of $S_2$, where

$$\mathbf{T}_{S_1 \sqcup S_2} = \frac{\mathcal{A}_{S_1}}{\mathcal{A}_{S_1} + \mathcal{A}_{S_2}} \mathbf{T}_{S_1} + \frac{\mathcal{A}_{S_2}}{\mathcal{A}_{S_1} + \mathcal{A}_{S_2}} \mathbf{T}_{S_2},$$

$\mathcal{A}_{S_1}$ being the area of $S_1$, $\mathcal{A}_{S_2}$ being the area of $S_2$;
- the second disparity is of the type:

$$\delta_\perp(S_1, S_2) = \lambda^m_{S_1 \perp S_2} - \frac{\mathcal{A}_{S_1}}{\mathcal{A}_{S_1} + \mathcal{A}_{S_2}} \lambda^m_{S_1} - \frac{\mathcal{A}_{S_2}}{\mathcal{A}_{S_1} + \mathcal{A}_{S_2}} \lambda^m_{S_2},$$

where $\lambda^m_{S_1 \perp S_2}$ is the smallest eigenvalue of the matrix

$$\mathbf{T}_{S_1 \perp S_2} = \frac{\mathcal{A}_{S_1}}{\mathcal{A}_{S_1} + \mathcal{A}_{S_2}} \mathbf{T}_{S_1} + \frac{\mathcal{A}_{S_2}}{\mathcal{A}_{S_1} + \mathcal{A}_{S_2}} (\mathbf{I} - \mathbf{T}_{S_2})$$

where $S_1$ is the other input segment and $S_2$ is the input segment, $\lambda^m_{S_1}$ is the smallest eigenvalue of the normal matrix $\mathbf{T}_{S_1}$ of $S_1$, and $\lambda^m_{S_2}$ is the smallest eigenvalue of the normal matrix $\mathbf{T}_{S_2}$ of $S_2$;
- for each respective group, determining the CAD volume extrusion operator corresponding to the respective group includes building a profile curve of the respective group;
- building the profile curve comprises:

  ◦ for each segment of the respective group, providing a respective profile curve of the segment; and
  ◦ iteratively concatenating the respective profile curves, where a pair of respective profile curves are concatenated if a third disparity between the respective profile curves of the pair is smaller than a third predefined threshold.

- concatenating two respective profile curves comprises merging an ending point of one of the profile curves with a starting point of the other profile curve;
- the third disparity between the respective profile curves is a distance between the ending point and the starting point;
- the distance is of the type:

$$d(\gamma_1, \gamma_2) = |\gamma_1^+ - \gamma_2^-|,$$

where $|\cdot|$ is a Euclidean norm in a profile plane of the respective group, $\gamma_1$ and $\gamma_2$ are the respective profile curves,

$\gamma_1^+$ is the ending point of $\gamma_1$, and $\gamma_2^-$ is the starting point of $\gamma_2$;

- for each respective group, determining the CAD volume extrusion operator corresponding to the respective group further includes determining an extrusion type of the CAD volume extrusion operator based on the built profile curve;
- determining the extrusion type comprises:

  ◦ determining whether the profile curve is closed or not; and
  ◦ computing a total curvature of the profile curve,

  where:

  ◦ the CAD volume extrusion operator is an extrusion surface if the profile curve is open and the absolute value of the total curvature is strictly smaller than $2\pi$,
  ◦ the CAD volume extrusion operator is a pad operator if the profile curve is closed and the total curvature equals $\beta 2\pi$, and
  ◦ the CAD volume extrusion operator is a pocket operator if the profile curve is closed and the total curvature equals $-\beta 2\pi$,

  where $\beta \in \{-1,1\}$; and/or
- the total curvature is of the type:

$$\kappa_{tot} = \int_I \kappa_\gamma(t)dt$$

where $k_\gamma(t)$ is the algebraic curvature of the curve $\gamma$ at parameter $t$.

It is further provided a computer program comprising instructions for performing the method.

It is further provided a computer readable storage medium having recorded thereon the computer program.

It is further provided a computer system comprising a processor coupled to a memory, the memory having recorded thereon the computer program.

**BRIEF DESCRIPTION OF THE DRAWINGS**

Non-limiting examples will now be described in reference to the accompanying drawings, where:

- FIG.s 1 and 2 illustrate the method; and

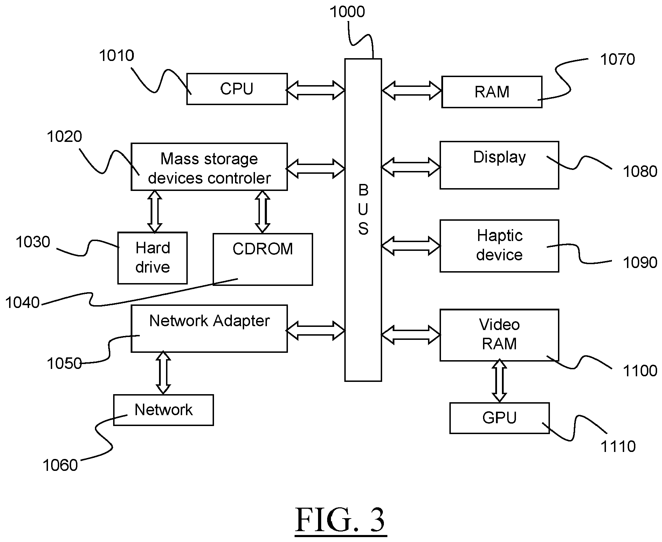

- FIG. 3 shows an example of the system.

**DETAILED DESCRIPTION**

It is proposed a computer-implemented method for CAD volume extrusion operator detection in a CAD 3D model. The CAD 3D model represents a mechanical part. The method comprises providing a segmentation of the CAD 3D model. The CAD 3D model includes a skin representing an outer surface of the mechanical part. The segmentation comprises segments each representing a skin portion. The method further comprises iteratively grouping segments, where two segments of a pair of segments are grouped if each segment of the pair is an extrusion surface and a union of the two segments is an extrusion surface having the same extrusion axis as the two segments, or if each segment of the pair is an extrusion surface and one of the two segments is a closing plane for the other segment. The method further comprises determining one or more CAD volume extrusion operators. Each CAD volume extrusion operator corresponds to a respective group.

The method forms an improved solution for CAD 3D model processing.

Notably, the method allows for CAD volume extrusion operator in a CAD 3D model, *i.e.* the method detects one or more CAD volume extrusion operators (a CAD volume extrusion operator being also referred to as "CAD volume extrusion feature", or simply "CAD extrusion feature") in the CAD 3D model. Detection of a CAD volume extrusion operator allows to detect a volume closed by extrusion surfaces, and thus goes beyond the detection of these surfaces alone and thus of the contour of the volume. This provides further meaningful characteristics about extruded parts of the mechanical part. For example, detection of these operators allows to distinguish between CAD Pocket features, CAD Pad features, and/or CAD split feature. Detection of CAD volume operator altogether enables an improved understanding of material distribution in the mechanical part and of the operators building this distribution. It provides an understanding of links between extrusion surfaces, notably an understanding of surfaces that have common extrusion axis.. Detection of CAD volume extrusion operator is particularly relevant in mechanical CAD/manufacturing CAD, as further explained hereinafter.

Furthermore, not only does the method detects CAD volume extrusion operators, but the method does so in an improved manner. Indeed, the method starts from a segmentation of the CAD 3D model and then groups iteratively segments of the segmentation, *i.e.* the method iteratively explores segments and groups explored segments. Two segments of a pair of segments are grouped in two cases. The first case is if they both are an extrusion surface and the union of the two segments is an extrusion surface, with the same extrusion axis as that of the two segments (*i.e.* the two segments having then the same extrusion axis). In other words, if the two segments are part of a same extruded volume (also referred to as "extrusion volume" or "volume extrusion"). The second case is if they both are an extrusion surface and one of them is a closing plane for the other, *i.e.* said other is a part of an extruded volume closed by the closing plane. Thereby, by iteratively grouping segments based on such considerations, the method ultimately (*i.e.* once all iterations are done) obtains groups of segments, each group corresponding to a respective extruded volume, *i.e.* the segments of a respective group altogether form a respective extruded volume. Then for each group, a CAD volume extrusion operator corresponding to the group, *i.e.* corresponding to the volume extrusion formed by the group, is determined. The group is in other words an extrusion volume resulting from the determined CAD volume extrusion operator. In other words, by grouping the segments this way, the method then determines one or more CAD volume extrusion operators each fitting a respective group. This allows to determine the CAD volume extrusion operators with efficiency and generality, as the method relies on extrusion axis similarity detection and closing plane detection to obtain the groups. Furthermore, this determination is computationally efficient.

The method is thereby not limited to the detection of specific types of extrusions (*e.g.* canonical extrusions that could be easily fitted by primitives), and detects any CAD volume extrusion operator, regardless of its type or of its extrusion profile. In other words, the grouping performed by the method enables the detection of any CAD volume extrusion operator in the CAD 3D model, be it a canonical operator or a non-canonical one. In yet other words, the method determines arbitrary CAD volume extrusion operators, with arbitrary extrusion profiles. The method may indeed detect CAD volume extrusion operators having canonical extrusion profiles (*e.g.* cylinders, cuboids) as well as CAD volume extrusion operators having free-form extrusion profiles, a canonical extrusion profile being an extrusion profile curve that is a concatenation of one or more straight line segments and/or circular arcs, a free-form extrusion profile being an extrusion profile curve that includes at least one curve portion that is not a straight line segment or a circular arc. In other words, the method may detect a CAD volume extrusion operator having an extrusion profile that is any one of: a rectangle or a circle, a concatenation of one or more straight line segments and/or circular arcs, or a free-form profile. In yet other words, the method detects one or more CAD volume extrusion operators based on the provided segmentation, and does not require other inputs than the segments, by grouping efficiently the segments to construct all the plausible profiles, which makes the method generic in terms of extrusion profile and efficient.

As previously explained, detection of CAD volume extrusion operator is particularly relevant in manufacturing CAD/mechanical CAD. Manufacturing CAD designates software solutions to assist design processes and manufacturing process, whereby the objective is to produce a physical product corresponding to a designed CAD 3D model. Within this context, the CAD model represents a manufacturing product (which is a mechanical part), that may be manufactured downstream to its design (*e.g.* with a design process that includes the method). The method may thus be included in such a manufacturing CAD process that includes a design process (*i.e.* of the mechanical part represented by the CAD 3D model) and/or manufacturing process (*i.e.* of the mechanical part upon completion of its design by editions of the CAD 3D model). A CAD volume extrusion operator allows and facilitates the edition of a corresponding extrusion volume portion of the CAD model, for example by modifying the parameters associated with the operator (*e.g.* the height(s) of the extrusion). The manufacturing CAD process including the method may include a step of editing the CAD 3D model based on the detected CAD volume extrusion operator(s).

The method may for example form or be a part of a step of CAD feature obtention within the design process, which may be a step of feature-tree construction, that is a step of construction of a tree of CAD features underlying the CAD model. The concept of feature-tree is well known in manufacturing CAD. Within these steps, based on segments of the segmentation, some of which being extrusion surfaces each associated with an extrusion axis, the method groups segments into extrusion volumes and determines a respective CAD volume extrusion operator for each extrusion volume. In other words, the method takes as input extrusion surfaces (*i.e.* some of the segments) and outputs CAD extrusion features (*i.e.* the determined CAD volume extrusion operators). These CAD features obtained by the method may be integrated into a feature-tree, *e.g.* along with other CAD features obtained by other methods (*e.g.* executed before, after, or during execution of the method in the CAD feature obtention step). The step of CAD feature obtention may thus result in a list of CAD features, *e.g.* arranged in a feature-tree, including the CAD volume extrusion operators determined by the method.

The design process may further include, downstream to the CAD feature obtention step that includes the method, further design steps which use the obtained CAD features, including the extrusion operators determined by the method. These design steps may include editions of the CAD 3D model, tests of the CAD 3D model, and/or simulations involving the CAD 3D model. The editions may include edition steps to prepare the CAD 3D model in view of manufacturing of the corresponding mechanical part. Downstream to the design process, the manufacturing CAD process may include a manufacturing process which comprises manufacturing the mechanical part in accordance with its CAD 3D model as outputted by the design process. Prior to that, the manufacturing process may include a step of manufacturing preparation, which may include setting up the manufacturing (*e.g.* setting up the involved machines and/or manufacturing tools) in view of the manufacturing.

In the method, each determined CAD volume extrusion operator corresponds to (*e.g.* fits, builds) a respective group of segments, the latter being an extruded volume. Each such extruded volume is a volume which has a coherent geometry (*i.e.* that of a volume extrusion, such as a pad, a pocket or a split) and which is coherent from the point of view of the manufacturing. In other words, the portion of the mechanical part which corresponds to the extruded volume has a geometry/shape requiring and/or adapted to a respective manufacturing process (*e.g.* molding, additive manufacturing or machining). The detection of a CAD volume extrusion corresponding to this portion, that the method allows, enables to perform editions, downstream to the method, *e.g.* within the previously mentioned design process, of the corresponding portion of the CAD 3D model (*i.e.* the corresponding group of segments) in view of this manufacturing process.

For example, the mechanical part may be a molded part (*i.e.* a part manufactured by molding), where each group of one or more (*e.g.* all) of the groups of segments represents a portion of the mechanical part which is manufactured by molding. For each such group, the detection of the CAD volume extrusion operator for the group allows to apply (*e.g.* as an edition step, as previously-discussed) a draft operator to CAD volume extrusion that corresponds to the group. As known *per se* from manufacturing CAD, draft operators are CAD operators applicable to CAD extrusion features, and the application of a draft operator to an extrusion feature allows to confer to the extrusion a conical shape by defining a draft angle with respect to the extrusion axis of the extrusion. During the molding process of the corresponding portion, which inherits this conical shape obtained during the design, the conical shape eases the withdrawal of the portion from the mold (*i.e.* the demolding/unmolding). In other words, extrusions may be efficiently drafted (a slight angle applied to vertical portions thereof) in order to facilitate their unmolding along their extrusion axis. The method may thereby, as previously discussed, be included in a manufacturing CAD process of design and/or manufacturing of a molded part, comprising, downstream to the method, edition steps including the application of one or more draft operators to one or more CAD volume extrusion features detected by the method to meet constraints of the corresponding mold. Downstream to these edition steps, the manufacturing CAD process may comprise the manufacturing of the mechanical part by molding, including a step of withdrawal from the mold, which is eased by the upstream draft operator application.

In other examples, the mechanical part may be an additive manufacturing part (*i.e.* a part manufactured by additive manufacturing), where each group of one or more (*e.g.* all) of the groups of segments represents a portion of the mechanical part which is manufactured by additive manufacturing. For each such group, the detection of the CAD volume extrusion operator for the group allows to define (*e.g.* as an edition step and/or a manufacturing set up step, as previously-discussed), a 3D printing path along the extrusion axis of the CAD volume extrusion that corresponds to the group. The extrusion axis may correspond to an optimal 3D printing path or 3D printing orientation. The method may thereby, as previously discussed, be included in a manufacturing CAD process of design and/or manufacturing of an additive manufactured part comprising, downstream to the method, edition steps including the definition of a printing path along the extrusion axis of one or more CAD volume extrusion features detected by the method. The manufacturing CAD process may further include, downstream to these edition steps, a step of defining a setup of a 3D printer in accordance with the defined printing path(s) and a step of manufacturing of the mechanical part in accordance with the setup and with the 3D printer.

In yet other examples, the mechanical part may be a machined part (*i.e.* a part manufactured by machining, such as cutting), where each group of one or more (*e.g.* all) of the groups of segments represents a portion of the mechanical part which is manufactured by machining. For each such group, the detection of the CAD volume extrusion operator for the group allows to define (*e.g.* as an edition step and/or a manufacturing set up step, as previously-discussed), a path of a machining tool (*e.g.* a cutting tool) along the extrusion axis of the CAD volume extrusion that corresponds to the group. The method may thereby, as previously discussed, be included in a manufacturing CAD process of design and/or manufacturing of a machined part comprising, downstream to the method, edition steps including the definition of a path of a machining tool along the extrusion axis of one or more CAD volume extrusion features detected by the method. The definition of the path may include the identification of extruded portions of the mechanical part to be cut, for example sharp portions to be smoothed with the machined tool. The manufacturing CAD process may further include, downstream to these edition steps, a step of defining a setup of the machining tool in accordance with the defined path(s) and a step of manufacturing of the mechanical part in accordance with the setup and with the machining tool.

The method is now further discussed.

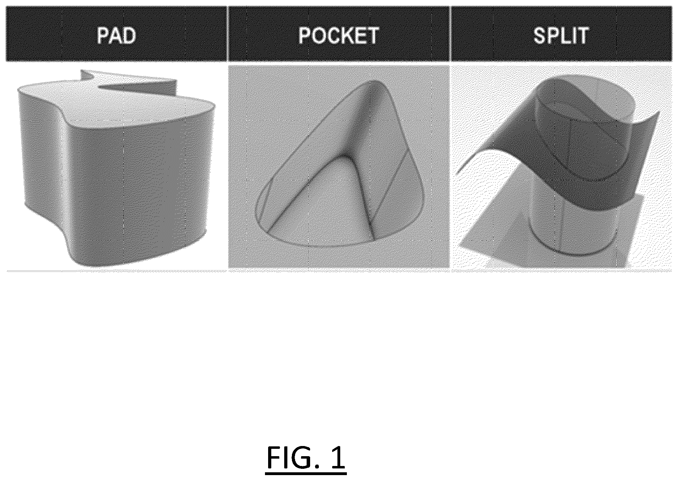

The method is for CAD volume extrusion operator detection in a CAD 3D model representing a mechanical part. In other words, the method, based on the CAD 3D model, detects one or more CAD volume extrusion operators in the CAD 3D model. A CAD volume extrusion operator, which may also be referred to as a "CAD volume extrusion feature" or simply "CAD extrusion feature", is a CAD operator that corresponds to a volume extrusion, *i.e.* that defines the volume extrusion as the result of the application of the operator. In other words, the CAD volume extrusion defines the volume extrusion as the result of the application of one or more parameters (*e.g.* a profile curve, an extrusion axis, height limits, and a type such as Pad, Pocket or Split) defining the operator. The volume extrusion is a 3D volume portion of the CAD model that is shaped as an extrusion, and corresponds to a distribution of material of the mechanical part arranged as an extrusion. The volume is formed by the aggregation of extrusion surfaces having a same extrusion axis, and possibly of a closing plane, the aggregation altogether defining the extruded volume obtainable by applying the corresponding CAD volume extrusion operator. In other words, the application of the CAD volume extrusion operator yields the volume extrusion. In yet other words, the CAD volume extrusion operator is a CAD feature (*i.e.* an extrusion feature) that builds the portion of the model that corresponds to the group of segments for which the operator is determined. For example, each CAD volume extrusion operator may be defined by: a (planar) profile curve y, an extrusion axis $u_e$, Height limits $h_{min}$, $h_{max}$, and a type (Pad, Pocket, Extrusion surface, such as Split). FIG. 1 illustrates the Pad, Pocket and Split types.

The method detects such operators in a CAD 3D model. For that, the method comprises first the providing of a segmentation of the CAD 3D model, which is now discussed. Prior to this discussion, the CAD 3D model is now discussed.

The CAD 3D model is a 3D modeled object.

A modeled object is any object defined by data stored e.g., in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD and PLM system, as will be apparent from the definitions of such systems provided below.

By CAD system, it is additionally meant any system adapted at least for designing a modeled object on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g., non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object or 3D model, *e.g.,* representing a product such as a part or an assembly of parts, or possibly an assembly of products. By "3D modeled object" or "3D model", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (*i.e.,* increases the speed at which designers statistically accomplish their task). This speeds up the manufacturing process in the industry, as the design of the products is part of the manufacturing process.

The CAD 3D model in the method is a 3D modeled object that represents the geometry of a manufacturing product (*i.e.* a product to be manufactured in the real world subsequent to the completion of its virtual design with for instance a CAD software solution or CAD system), which is a mechanical part (or equivalently a mechanical assembly of parts, as the assembly of parts may be seen as a part itself from the point of view of the method, or the method may be applied independently to each part of the assembly), or more generally any rigid body assembly (*e.g.* a mobile mechanism). A CAD software solution allows the design of products in various and unlimited industrial fields, including: aerospace, architecture, construction, consumer goods, high-tech devices, industrial equipment, transportation, marine, and/or offshore oil/gas production or transportation. The 3D modeled object may thus represent an industrial product which may be any mechanical part, such as a part of a terrestrial vehicle (including *e.g.* car and light truck equipment, racing cars, motorcycles, truck and motor equipment, trucks and buses, trains), a part of an aerial vehicle (including *e.g.* airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including *e.g.* industrial manufacturing machinery, heavy mobile machinery or equipment, installed equipment, industrial equipment product, fabricated metal product, tire manufacturing product), an electro-mechanical or electronic part (including *e.g.* consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

The 3D model may form a discrete geometrical representation of the mechanical part, which is a 3D object in the real-world. The discrete geometrical representation is a data structure which comprises a discrete set of pieces of data. Each piece of data may be equivalently referred to as a discrete element. Each piece of data represents a respective geometrical entity positioned in a 3D space. Each geometrical entity represents a respective location of the 3D object (in other words, a respective portion of material constitutive of a solid represented by the 3D object). The aggregation (*i*.e., union or juxtaposition) of the geometrical entities represents altogether the 3D object. The discrete geometrical representation may in examples comprise a number of such pieces of data higher than 100, 1000, or 10000.

The discrete geometrical representation may for example be a 3D point cloud, each geometrical entity being a point. The discrete geometrical representation may alternatively be a 3D mesh, each geometrical entity being a mesh tile or face. The 3D mesh may be regular or irregular (*i*.e., consisting or not of faces of a same type). The 3D mesh may be a polygonal mesh, for example a triangular mesh. The 3D mesh may be obtained from a 3D point cloud, for example by triangulating the 3D point cloud (*e.g.,* with a Delaunay triangulation).

The 3D point cloud or 3D mesh may be determined from physical measurements on a real object (*i.e.* a real mechanical part), for example within a reconstruction process. The 3D reconstruction process may comprise providing the real object, providing one or more physical sensors each configured for acquiring a respective physical signal, and acquiring one or more respective physical signals by operating the one or more physical sensors on the real object (*i*.e., scanning the real object with each sensor). The 3D reconstruction may then automatically determine a 3D point cloud and/or a 3D mesh based on the measurements, according to any known technique. The one or more sensors may comprise a plurality of (*e.g.*, RGB, and/or image or video) cameras and the determination may comprise a structure-from-motion analysis. The one or more sensors may alternatively or additionally comprise one or more depth sensors (*e.g.,* on an RGB-depth camera) and the determination may comprise a 3D reconstruction from depth data. The one or more depth sensors may for example comprise a laser (*e.g.,* a lidar) or an ultrasound emitter-receiver. The 3D reconstruction process may be a part of a reverse engineering process to obtain a CAD model for the real object, the reverse engineering process also including the method which detects CAD volume extrusion operators on the measured 3D object. The CAD volume extrusion operators detected by the method contributes to the reverse engineering process as contributes to defined the raw measured object by CAD features.

The 3D point cloud or 3D mesh may alternatively be obtained from a 3D modeled object representing a skin (*i.e.,* outer surface) of a solid or mechanical part for example by ray casting on the 3D modeled object or tessellating the 3D modeled object. The tessellating may be performed according to any 3D modeled object rendering process. Such a rendering process may be coded on any CAD system in order to display a graphical representation of the 3D modeled object. The 3D modeled object may be designed or have been designed by a user with a CAD system.

The CAD 3D model includes a skin, *e.g.* an outer surface of the 3D model forming an outer hull or outer boundary thereof. The skin represents an outer surface of the mechanical part. The outer surface is a surface in contact with a medium other than the mechanical part, *e.g.* another mechanical part or air. In other words, the outer surface forms a delimitation between the outside of the mechanical part and the inside of the mechanical part. The skin is any surface representation of the outer surface. The skin may be a closed surface, thereby defining an inward orientation and an outward orientation with respect to the material of the CAD 3D model. This allows to define normals to the CAD 3D model unambiguously: they are always oriented outwardly. In other words, the closeness of a surface allows identification of the inside and outside volumes, which allows to define the normals. In the context of the present disclosure, a mechanical part may correspond to a volume defined by a first closed surface that defines the outer border of this volume, and possibly by one or more second closed surfaces inside the first closed surfaces. The second closed surfaces, if any, cannot intersect.

The method comprises providing a segmentation of the CAD 3D model.

The providing of the segmentation may comprise providing an already existing segmentation of the CAD 3D model, for example by retrieving this existing segmentation from a (*e.g.* distant) memory or database where it has been stored further to its obtention. The segmentation may be the segmentation resulting from the method for segmenting a 3D modeled object described in European Patent Application EP21305195.6 filed on 16 February 2021 by Dassault Systèmes, which is incorporated herein by reference. In other words, the provided segmentation of the CAD 3D model may be the segmentation (*i.e.* the set of first and second segments) resulting from the method for segmenting a 3D modeled object described in European Patent Application EP21305195.6 when applied to the 3D modeled object that is the CAD 3D model. Alternatively, the segmentation may be the segmentation that results from the performing of a segmentation according to the method of use described in European Patent Application EP21305293.9 filed on 10 March 2021 by Dassault Systèmes, which is incorporated by reference. In other words, the provided segmentation of the CAD 3D model may be the segmentation resulting from the performing of a segmentation according to the method of use described in European Patent Application EP21305293.9 when applied to the 3D modeled object that is the CAD 3D model. Yet alternatively, the segmentation may be any other segmentation of the CAD 3D model, resulting from another segmentation method.

Alternatively, the providing of the segmentation of the CAD 3D model may comprise providing the CAD 3D model (*e.g.* by retrieving it from a memory or database) and then performing a segmentation of the CAD 3D model. The performing of a segmentation of the CAD 3D model may comprise applying to the CAD 3D model the method for segmenting a 3D modeled object described in previously-cited European Patent Application EP21305195.6 (*i.e.* the CAD 3D model playing in this case the role of the 3D modeled object in the method described in previously-cited European Patent Application EP21305195.6). In this case the segmentation is the set of first and second segments that results from the method described in previously-cited European Patent Application EP21305195.6 when applied to the CAD 3D model. Alternatively, the performing of a segmentation of the CAD 3D model may comprise applying to the CAD 3D model the method of use described in previously-cited European Patent Application EP21305293.9 (*i.e.* the CAD 3D model playing in this case the role of the 3D modeled object in the method of use described in previously-cited European Patent Application EP21305293.9). In this case the segmentation is the result of the step of performing a segmentation according in the method of use described in previously-cited European Patent Application EP21305293.9 when applied to the CAD 3D model. Yet alternatively, the performing of a segmentation of the CAD 3D model may comprise applying any other method of segmentation.

In any case, the segmentation comprises segments, the segments altogether forming the segmentation. Each segment represents (*e.g.* is) a skin portion, *i.e.* a portion of the skin. In other words, each segment corresponds to (*e.g.* is) a portion of the outer surface of the CAD 3D model. Being a segment of a segmentation, each segment is a geometrically coherent surface portion of the 3D modeled object (*e.g.* an extrusion surface or a revolution surface), having a maximal inner consistency.

Further to the providing of the segmentation of the CAD 3D model, the method then comprises iteratively grouping segments. In other words, the method iteratively visits/explores/browses segments and groups them. Exploring may consist in browsing a list of the segments. The grouping is based on the criterion to group two segment of a pair of segments (a pair of segments always consisting in two segments) if:

- each segment of the pair is an extrusion surface and a union of the two segments is an extrusion surface having the same extrusion axis as the two segments; or
- each segment of the pair is an extrusion surface and one of the two segments is a closing plane for the other segment.

The method may iteratively assess whether pairs of segments verify the criterion, and group the segments of a pair when they verify the criterion. The criterion is notably based on segments being extrusion surfaces.

For that, the method may comprise, prior to the iterative grouping, a detection of which segments are extrusion surfaces. In other words, prior to the iterative grouping, the method may comprise detecting, within the segments, the segments which are extrusion surfaces. The results of this detection may be stored in a memory, *e.g.* the method may label the segments detected to be extrusion surfaces and store the labels with their associated segments. This detection may comprise applying any material extrusion detection method. For example, this detection may comprise applying the method for material extrusion detection (*e.g.* iteratively, to each segment) described in European Patent Application EP21305673.2 filed on 21 May 2021 by Dassault Systèmes, which is incorporated herein by reference, to segments of the segmentation, each being a skin portion and playing the role of the skin portion in the method for material extrusion detection described in European Patent Application EP21305673.2. The detection of which segments are extrusion surfaces may be performed beforehand, *e.g.* at an initial stage of the method, for example after the performing of a segmentation. In other words, the method may provide the segmentation with stored data (*e.g.* labels, as previously discussed) indicating which segments are extrusion surfaces. The method may alternatively not comprise the detection and use the results of an existing detection, for example obtained with applications of the detection method described in European Patent Application EP21305673.2 filed on 21 May 2021 by Dassault Systèmes. The method may further comprise a detection, among the segments already detected as being an extrusion surface, of segments which are planes. For that, the method may simply detect, among the segments detected as being an extrusion surface, which segments have another extrusion axis, as a segment having two extrusion axis is a plane. The method may alternatively not comprise this further detection and use the results of an existing such detection.

In the iterative grouping of segments, the method may thereby iteratively explore pairs of segments of which segments are detected (*e.g.* labelled) to be extrusion surfaces. Then, for each such explored pair of segments, the method may determine whether a union of the two segments is an extrusion surface having the same extrusion axis as the two segments, or whether one of the segments is a closing plane for the other segment. The union is to be understood mathematically, as the mathematical union of two sets. A closing plane of a volume extrusion is a portion (*i.e.* a segment) of the volume extrusion that is a plane which is orthogonal to the extrusion axis of the volume extrusion. Therefore, a segment is a closing plane for another segment if said other segment is an extrusion surface with an extrusion axis and said segment is a plane that is orthogonal to the extrusion axis. Thereby, the criterion may be equivalently formulated as: two segments of a pair of segments are grouped if both segments are extrusion surfaces, and if:

- a union of the two segments is an extrusion surface having the same extrusion axis as the two segments; or
- one of the two segments is a plane orthogonal to the extrusion axis of the other segment.

The iterative grouping may thus comprise iteratively exploring pairs of segments for which both segments are extrusion surfaces, and grouping the segments of an explored pair if a union of the two segments is an extrusion surface having the same extrusion axis as the two segments, or if one of the two segments is a plane orthogonal to the extrusion axis.

Grouping two segments may comprise associating together the two segments, and marking them (*e.g.* labelling them) as being part of the same group. Grouping two segments may in some cases further comprise merging the two segments, thereby creating a new segment. Specifically, when the criterion is fulfilled because the segments of the pair are extrusion surfaces and a union of the two segments is an extrusion surface having the same extrusion axis as the two segments, grouping the two segments comprises merging the two segments, the surface resulting from the merging forming a segment for a next iteration(s). Merging the segments may consist in computing the union of the segments, the result of the merge being the union, an associating to the union the extrusion axis (i.e. common to the two segments). Merging the segments may further comprise labelling the union as being an extrusion surface.

The surface resulting from the merge may not be a segment in the sense of "a segment of a segmentation", but is considered as a segment of the segmentation for the next iteration(s). When the criterion is fulfilled because each segment of the pair is an extrusion surface and one of the two segments is a closing plane for the other segment, grouping the two segments does not comprise merging the two segments, but associating the segment that is the closing plane to the other segment.

Iteratively grouping segments comprises one or more iteration. Each iteration may comprise exploring a pair of segments, determining whether the segments of explored pair fulfill the criterion, and grouping the two segments if they do fulfill the criterion. Determining whether the segments fulfill the criterion may consist in determining whether:

- a first disparity between the value of an extrusion-detection objective function for the union of the segments of the explored pair and a weighted sum of the values of the extrusion-detection objective function for the segments of the explored pair is lower than a first predefined threshold, the sum being weighted based on the areas of the segments, or
- a second disparity between the value of an extrusion-closing objective function for the segments of the explored pair and the weighted sum is lower than a second predefined threshold, the extrusion-closing objection function rewarding orthogonality of an input segment with respect to an extrusion axis of another input segment.

Grouping the two segments if they do fulfill the criterion may in this case consist in grouping the segments of the explored pair if the first disparity is lower than the first predefined threshold or if the second disparity is lower than the second predefined threshold.

The extrusion-detection objective function is any function that allows detection of an extrusion surface, *e.g.* by vanishing (or tending to vanish) for an input extrusion in which case verifying smallness of the value of the extrusion-detection objective function for an input surface amounts to verify that the surface is an extrusion surface. Such a function may for example be a function that rewards orthogonality between a candidate extrusion axis of an input surface and a normal vector to the input surface, *e.g.* by tending to vanish when there is such orthogonality. Verifying that this function has a value smaller than a predefined extrusion-detection threshold corresponds to verifying that the candidate extrusion axis is indeed an extrusion axis of the input surface, which is then an extrusion surface. Thus, a segment that is an extrusion surface has an extrusion axis which minimizes or tends to minimize the value of the extrusion-detection objective function. In other words, the value of the function for an input segment that is an extrusion is or tends to be the minimum of the function. The extrusion-detection objective function may for example be the objective function described in previously-cited European Patent Application EP21305673.2 and which minimization is as well described in the same European Patent Application.

The first disparity is between the value of the extrusion-detection objective function for the union of the segments and a weighted sum of the values of the extrusion-detection objective function for the two segments of the pair (*i.e.* a weighted sum of the two respective values of the extrusion-detection objective function for two segments of the pair).

The first disparity is any function that tends to vanish when the union is an extrusion surface having as extrusion axis the same extrusion axis than that of the two segments, *i.e.* when the value of the extrusion-detection objective function tends to equal the weighted sum. The disparity may for example be a difference between the value of the extrusion-detection objective function for the union and the weighted sum of the values of the function for the two segments. The sum is weighted based on the areas of the segments, for example normalized based on these areas, so that smallness of the disparity captures that the union has the same extrusion axis by using the disparity. For example, the sum may be weighted as follows: for each segment, the value of the extrusion-detection objective function of the segment is multiplied by the area of the segment divided by the sum of the areas of the two segments.

The extrusion-closing objective function is any function that allows detection that an input extrusion surface is a closing plane for another input extrusion surface, *e.g.* by vanishing (or tending to vanish) for these inputs in which case verifying smallness of the value of the extrusion-closing objective function for these inputs amounts to verify that one of the inputs is a closing plane for the other input. For that, the extrusion-closing objective function is an function that rewards orthogonality of an input segment with respect to an extrusion axis of another input segment, *e.g.* by tending to vanish when there is such orthogonality, such that verifying that this function has a value smaller than a predefined extrusion-closing threshold corresponds to verifying that an input extrusion surface is indeed a closing plane for the other input extrusion surface.

The second disparity is between the value of the extrusion-closing objective function for the segment of the explored pair and the weighted sum (*i.e.* the weighted sum of the values of the extrusion-detection objective function for the segments of the explored pair). The second disparity is any function that tends to vanish when one of the segments is a closing plane for the other segment, *i.e.* when the value of the extrusion-closing objective function tends to equal the weighted sum. The disparity may be for example a difference between the value of the extrusion-closing function for the explored pair and the weighted sum.

The first threshold and the second threshold are both predefined, *i.e.* are defined beforehand, *e.g.* at an initial stage of the method. The first threshold may equal the second threshold. The first threshold and/or the second threshold may be defined by a user.

For example, a small value of the first threshold and/or the second threshold yields small groups of segments. Defining such a small value allows to obtain groups of segments which correspond exactly or accurately to extrusion volumes and/or which correspond to elementary extrusion volumes (*e.g.* a cylinder). Indeed, these small groups may be fitted very accurately with their corresponding determined CAD volume extrusion operators (*i.e.* the application of the operator tends to produce the corresponding group substantially exactly). This solution (*i.e.* defining a small value for the first threshold and/or the second threshold) allows to detect CAD volume extrusion operators corresponding to detailed extruded volumes. This means detecting an increased number of such operators but obtaining a more detailed description/definition of the CAD 3D model in terms of CAD operators. This enables ultimately the manufacturing of a mechanical part featuring more details, as the increased level of accuracy in terms of CAD operators allows refining the manufacturing set up.

Alternatively, a large value of the first threshold and/or the second threshold yields large groups of segments These large groups may correspond to volumes which have a general extrusion shape and which are fitted by the corresponding CAD volume extrusion operator, but to a lesser extent than smaller groups. This solution (i.e. defining a large value of the first threshold and/or the second threshold) allows to detect CAD volume extrusion operators corresponding to general extrusion volumes, but possibly without fitting these volumes in details. This means detecting a reduced number of such operators. This allows to save memory space for storing these operators. For example, a feature tree with this reduced number of CAD extrusion volume operators takes less memory space. This solution (*i.e.* defining a large value of the first threshold and/or the second threshold), even if yielding operators not fitting the corresponding extrusion volumes in details, enables the manufacturing of a mechanical part for which detailed extrusion volume shapes are not required, but only general extrusion shapes are. Furthermore, the design and manufacturing of such a part is more efficient due to the reduced number of CAD volume extrusion operators (*e.g.* the manufacturing set up is simpler and faster). This solution may be chosen for mass manufacturing of certain mechanical parts not requiring detailed extrusion volume shapes.

The value of the extrusion-detection objective function for an input segment (*i.e.* that is an extrusion surface) may be a smallest eigenvalue of a normal matrix of the input segment. The normal matrix of the input segment is the matrix of the outer normal vector to the surface of the input segment. In this case, the value of the extrusion-detection objective function for this input segment may be the value of the square of a seminorm of the extrusion axis of the input segment, the seminorm being the seminorm associated with the bilinear form defined by the normal matrix.

Additionally or alternatively, the value of the extrusion-closing objective function may be a smallest eigenvalue of a matrix that is a weighted sum of a normal matrix of said other input segment and of the identity minus a normal matrix of said input segment. The sum is weighted based on the areas of the input segments. As previously, the normal matrix of an input segment is the matrix of the outer normal vector to the surface of the input segment, and the value of the extrusion-detection objective function for this input segment may be the value of the square of a seminorm of the extrusion axis of the input segment, the seminorm being the seminorm associated with the bilinear form defined by the normal matrix. The value of the extrusion-closing objective function may be the value of a seminorm of the extrusion axis (*i.e.* of the segments of the pair), the seminorm being the seminorm associated with the bilinear form defined by the matrix that is a weighted sum of a normal matrix of said other input segment and the identity minus a normal matrix of the said input segment. The sum is weighted based on the areas of the input segments, for example normalized based on these areas. For example, the sum may be weighted as follows: in the sum, the normal matrix of said other input segment is multiplied by multiplied by the area of said other input segment divided by the sum of the areas of the two input segments, and the identity minus the normal matrix of the said input segment is multiplied by the area of said input segment divided by the sum of the areas of the two input segments.

The first disparity may be of the type:

$$\delta(S_1, S_2) = \lambda_{S_1 \sqcup S_2}^m - \frac{\mathcal{A}_{S_1}}{\mathcal{A}_{S_1} + \mathcal{A}_{S_2}} \lambda_{S_1}^m - \frac{\mathcal{A}_{S_2}}{\mathcal{A}_{S_1} + \mathcal{A}_{S_2}} \lambda_{S_2}^m,$$

where $S_1$ and $S_2$ are the two segments of the explored pair,

$$\lambda_{S_1 \sqcup S_2}^m$$

is the smallest eigenvalue of the normal matrix $\mathbf{T}_{S_1 S_2}$ of the union of $S_1$ and $S_2$, $\lambda_{S_1}^m$ is the smallest eigenvalue of the normal matrix $\mathbf{T}_{S_1}$ of $S_1$, $\lambda_{S_2}^m$ is the smallest eigenvalue of the normal matrix $\mathbf{T}_{S_2}$ of $S_2$, where

$$\mathbf{T}_{S_1 \sqcup S_2} = \frac{\mathcal{A}_{S_1}}{\mathcal{A}_{S_1} + \mathcal{A}_{S_2}} \mathbf{T}_{S_1} + \frac{\mathcal{A}_{S_2}}{\mathcal{A}_{S_1} + \mathcal{A}_{S_2}} \mathbf{T}_{S_2},$$

$\mathcal{A}_{S_1}$ being the area of $S_1$, $\mathcal{A}_{S_2}$, being the area of $S_2$.

Additionally or alternatively, the second disparity may be of the type:

$$\delta_{\perp}(S_1, S_2) = \lambda_{S_1 \perp S_2}^m - \frac{\mathcal{A}_{S_1}}{\mathcal{A}_{S_1} + \mathcal{A}_{S_2}} \lambda_{S_1}^m - \frac{\mathcal{A}_{S_2}}{\mathcal{A}_{S_1} + \mathcal{A}_{S_2}} \lambda_{S_2}^m,$$

where $\lambda_{S_1 \perp S_2}^m$ is the smallest eigenvalue of the matrix

$$\mathbf{T}_{S_1 \perp S_2} = \frac{\mathcal{A}_{S_1}}{\mathcal{A}_{S_1} + \mathcal{A}_{S_2}} \mathbf{T}_{S_1} + \frac{\mathcal{A}_{S_2}}{\mathcal{A}_{S_1} + \mathcal{A}_{S_2}} \left(\mathbf{I} - \mathbf{T}_{S_2}\right)$$

where $S_1$ is the other input segment and $S_2$ is the input segment, $\lambda_{S_1}^m$ is the smallest eigenvalue of the normal matrix $\mathbf{T}_{S_1}$ of $S_1$, and $\lambda_{S_2}^m$ is the smallest eigenvalue of the normal matrix $\mathbf{T}_{S_2}$ of $S_2$.

An implementation of the iterative grouping is now discussed.

The objective function of the implementation is first discussed. In this implementation, a surface (*e.g.* a segment) $S \subset \mathbb{R}^3$ is said to be a perfect extrusion surface if and only if it satisfies the following condition:

$$\exists u \in \mathbb{R}^3 \setminus \{(0,0,0)\} : \quad \forall p \in S, \quad n_p \cdot u = 0,$$

where $n_p$ is the normal vector to the surface $S$ at point $p$. This condition may be relaxed by requiring that $S$ minimizes the extrusion-detection objective function. In this implementation, the extrusion-detection objective function is the function $\mathcal{J}_S \colon \mathbb{R}^3 \longrightarrow \mathbb{R}_+$ be defined for an input axis u (i.e. a candidate extrusion axis of an input segment) by:

$$\mathcal{J}_S(u) = \frac{1}{\mathcal{A}_S} \int_S (u \cdot n_p)^2 \, dvol_S$$

where $\mathcal{A}_S = \int_S dvol_S$ and $vol_s$ is the canonical measure on S (the one induced by the Lebesgue measure on $\mathbb{R}^3$). The relaxation is:

$$\exists u \in \mathbb{R}^3 \colon |u| = 1 \text{ and } \mathcal{J}_E(u) \leq \epsilon,$$

for an extrusion-detection threshold $\epsilon > 0$ (for example $\epsilon = 1.10^{-3}$). This is equivalent to:

$$\min \{ \mathcal{J}_S(u) \mid u \in \mathbb{R}^3, \ |u| = 1 \} \ \leq \ \epsilon.$$

By noticing that $\mathcal{J}_S(u) = u^T \mathbf{T}_S u$ with:

$$\mathbf{T}_S = \frac{1}{\mathcal{A}_S} \int_S nn^T dvol_S,$$

$\mathbf{T}_S$ being the normal matrix for the surface $S$, in order to decide if a surface S may be considered as being an extrusion surface (i.e. is considered at least an approximated extrusion surface), one may thus solve the optimization problem:

$$\min_{u \in \mathbb{R}^3} \ u^T \mathbf{T}_S u$$

$$s.t. \ |u| = 1$$

This is equivalent to finding the smallest eigenvalue $\lambda_S^m$ of $\mathbf{T}_S$ as well as its associated eigenvector $u_S^m$ ($\lambda_S^m = \mathcal{J}_S(u_S^m)$ is the minimum value of the problem). The condition to be considered an extrusion surface (of axis $u_S^m$) may be then reformulated as:

$$\lambda_S^m \leq \epsilon.$$

This condition may be used on approximated representations on a surface, like a mesh or a point cloud (as soon as we are given the normal vectors corresponding to the points). Indeed, for a triangle mesh

$$\mathcal{M}(\mathcal{V}, \mathcal{E}, \mathcal{F})$$

for instance, corresponds to a piecewise linear surface S, and we have exactly:

$$\mathbf{T}_S = \frac{1}{\sum_{\tau \in \mathcal{F}} \mathcal{A}_\tau} \sum_{\tau \in \mathcal{F}} \mathcal{A}_\tau n_\tau n_\tau^T$$

where $\mathcal{F}$ is the set of triangle faces of the mesh, $|\tau|$ is the area of triangle $\tau \in \mathcal{F}$ and $n_\tau$ is the normal vector of triangle $\tau \in \mathcal{F}$.

The segments which are extrusion surfaces verify the relaxed condition in the currently-discussed implementation. Additionally, in the case where these segments are detected to be extrusion surfaces described in previously-cited European Patent Application EP21305673.2, by applying the method for material extrusion detection where each segment plays the role of the skin portion in this method, these segments verify the further condition that the ratio described in previously-cited European Patent Application EP21305673.2 is lower than the ratio threshold described in previously-cited European Patent Application EP21305673.2.

This implementation may comprise, prior to the iterative grouping of segments, a step of obtaining the segmentation, as previously discussed. This step results in a partition of the skin into elementary disjoint sub-surfaces $(S_1^{el}, \cdots, S_N^{el})$ (*i.e.* the segments). The, the implementation may comprise choosing a extrusion-detection threshold $\epsilon > 0$ sufficiently small (*e.g.* $5.10^{-3}$), and for every

$$i \in [\![1, N]\!]$$

, applying the following process:

- computing the normal matrix $\mathbf{T}_{S_i^{el}}$ of $S_i^{el}$ : for instance if

$$S\,(\mathcal{V}, \mathcal{E}, \mathcal{T})$$

is a triangle mesh, and

$$S_i^{el}\,(\mathcal{V}_i^{el}, \mathcal{E}_i^{el}, \mathcal{T}_i^{el})$$

is a sub-mesh, then the computing uses the discrete formula:

$$\mathbf{T}_{S_i^{el}} = \frac{1}{\mathcal{A}_{S_i^{el}}} \sum_{\tau \in \mathcal{T}_i^{el}} \mathcal{A}_\tau n_\tau n_\tau^T \ ;$$

- computing the eigenvalue $\lambda_{S_i^{el}}^1 < \lambda_{S_i^{el}}^2 < \lambda_{S_i^{el}}^3$ of $\mathbf{T}_{S_i^{el}}$ ;
- If $\lambda_{S_i^{el}}^1 \leq \epsilon$ , labelling $S_i^{el}$ as a potential (elementary) extrusion part, and storing the computed $\lambda_{S_i^{el}}^m = \lambda_{S_i^{el}}^1$ as well as the normal matrix $\mathbf{T}_{S_i^{el}}$ ;
- If $\lambda_{S_i^{el}}^2 \leq \epsilon$ , labelling $S_i^{el}$ as a potential plane part.

The implementation then iteratively groups the segments as follows.

If $S_1$ and $S_2$ are two segments of S that have been labeled as potential extrusion parts (*i.e.* they are detected extrusion surfaces), they are grouped into a single segment

$$S_1 \sqcup S_2$$

or not based on the following criterion:

Let $\mathbf{T}_{S_1}$ and $\mathbf{T}_{S_2}$ be the respective normal matrices of $S_1$ and $S_2$, are previously computed (or the implementation computes them). To compute the normal matrix $\mathbf{T}_{S_1 S_2}$, the implementation uses the weighted sum:

$$\mathbf{T}_{S_1 \sqcup S_2} = \frac{\mathcal{A}_{S_1}}{\mathcal{A}_{S_1} + \mathcal{A}_{S_2}} \mathbf{T}_{S_1} + \frac{\mathcal{A}_{S_2}}{\mathcal{A}_{S_1} + \mathcal{A}_{S_2}} \mathbf{T}_{S_2}.$$

Thereby no computation on all the faces is required. Then the implementation computes the associated smallest eigen-value

$$\lambda^m_{S_1 \sqcup S_2}$$

of $\mathbf{T}_{S_1 S_2}$. One could compare

$$\lambda^m_{S_1 \sqcup S_2}$$

to $\epsilon$ to see if $S_1$ LI $S_2$ is a potential extrusion part in the same sense that for the segments, but the approach of the implementation is a bit different.

The implementation compares the extrusion energy of the gathered parts

$$\mathcal{J}_{S_1 \sqcup S_2}\left(u^m_{S_1 \sqcup S_2}\right) = \lambda^m_{S_1 \sqcup S_2}$$

to the weighted sum of the extrusion energies of the segmented parts (recall that the extrusion energy of a surface $S'$

is the non negative value $\min\limits_{|u|=1} \mathcal{J}_{S'}(u) = \lambda^m_{S'}$ ). Specifically, the following disparity (*i.e.* the first disparity) is computed:

$$\delta(S_1, S_2) = \lambda^m_{S_1 \sqcup S_2} - \frac{\mathcal{A}_{S_1}}{\mathcal{A}_{S_1} + \mathcal{A}_{S_2}}\lambda^m_{S_1} - \frac{\mathcal{A}_{S_2}}{\mathcal{A}_{S_1} + \mathcal{A}_{S_2}}\lambda^m_{S_2}.$$

$\delta(S_1, S_2)$ is always non negative, but the closer it gets to 0, the less the energy of $(S_1, S_2)$ increases when they are grouped, and the more they are to be grouped.

The implementation groups $S_1$ and $S_2$ when

$$\delta(S_1, S_2) \leq \eta,$$

with the first threshold $\eta$ sufficiently small (e.g. $1.10^{-3}$). If that condition is satisfied, then the implementation comprises labeling $S_1$ LI $S_2$ as a potential extrusion part and storing the value of its extrusion energy, $\lambda^m_{S_1 \sqcup S_2}$ and its normal matrix $\mathbf{T}_{S_1 S_2}$.

If $S_1$ is labeled as a potential extrusion part and $S_2$ is labelled as a potential plane part, this implementation groups them or not following the same principle: the implementation uses the matrix (*e.g.* which is already computed, or, alternatively, the implementation computes it):

$$\mathbf{T}_{S_1 \perp S_2} = \frac{\mathcal{A}_{S_1}}{\mathcal{A}_{S_1} + \mathcal{A}_{S_2}} \mathbf{T}_{S_1} + \frac{\mathcal{A}_{S_2}}{\mathcal{A}_{S_1} + \mathcal{A}_{S_2}}\left(\mathbf{I} - \mathbf{T}_{S_2}\right).$$

and computes its smallest eigenvalue $\lambda^1_{S_1 \perp S_2}$. The implementation then computes the second disparity:

$$\delta_\perp(S_1, S_2) = \lambda^m_{S_1 \perp S_2} - \frac{\mathcal{A}_{S_1}}{\mathcal{A}_{S_1} + \mathcal{A}_{S_2}} \lambda^m_{S_1} - \frac{\mathcal{A}_{S_2}}{\mathcal{A}_{S_1} + \mathcal{A}_{S_2}} \lambda^m_{S_2}$$

and labels $S_2$ as a potential closing plane of $S_1$ if $\delta_\perp(S_1, S_2) \le \eta$.

The method further comprises, for each respective group, determining the CAD volume extrusion operator corresponding to the respective group. The determining of the CAD volume extrusion operator is now discussed.

As previously discussed, the respective group is a group of extrusion surfaces, possibly also comprising a closing plane as previously discussed, altogether forming a volume extrusion. The CAD volume operator corresponds to the group in that the application of the operator yields the volume extrusion formed by the group. In other words, the operator builds the group. The CAD volume extrusion operator may for example comprise several parameters, for example a profile curve (e.g. a planar profile curve), an extrusion axis, height limits, and an extrusion type (e.g. pad, pocket or split), so that the application of these parameters yields the volume extrusion. For example, the CAD volume operator may extrude material by sliding a profile curve along the extrusion axis, between the height limits, and according to the extrusion type (e.g. a pad correspond to material addition, a pocket corresponds to material removal). In other words, the CAD volume operator may be a set of parameters, such as the ones just discussed, of which application yields a volume having an outer boundary fitting the group. The determining of the CAD volume extrusion operator may comprise determining these parameters.

The determining of the CAD volume extrusion operator corresponding to the respective group may include building a profile curve of the respective group. Building the profile curve may be based on the profile curves of the segments in the respective group. For example, building the profile curve may comprise, for each segment of the respective group, providing a respective profile curve of the segment. In this case, building the profile curve further comprises iteratively concatenating the respective profile curves, where a pair of respective profile curves are concatenated if a disparity between the respective profile curves of the pair is smaller than a third predefined threshold.

The providing of the respective profile curves of each segment of the group may comprise retrieving these profile curves from a (e.g. distant memory) where they have been stored further to their computation. These profile curves may for example each be a profile curve obtainable (e.g. having been obtained) by the method of parameterization described in European Patent Application EP21305671.6 filed on 21 May 2021 by Dassault Systèmes. In this case, the corresponding segment plays the role of the skin portion in this method of parameterization, the segment being an extrusion surface which is a particular sweep (the method of parameterization described in European Patent Application EP21305671.6 applying to sweeps in general, but applies in particular for a distribution of material arranged as an extrusion, as described in the European Patent Application). This method of parameterization parameterizes the segment (i.e. determines one or more distributions of values each of a respective parameter of the segment) and, in the present case, further comprises the computing of a profile of the segment as described in European Patent Application EP21305671.6.

Alternatively, the providing of the respective profile curves of each segment of the group may comprise applying obtaining these profile curves. For example, this may comprise applying the method of parameterization described in previously-cited European Patent Application EP21305671.6. In other words, for each segment of the group, the providing of the respective profile curve of the segment may comprise applying the method of parameterization described in previously-cited European Patent Application EP21305671.6 including the step of computing a profile described in European Patent Application EP21305671.6, this application yielding a profile curve of the segment.

When the profile curves are obtained or obtainable by the previously-mentioned method described in previously-cited European Patent Application EP21305671.6, the profile curves are parametrized with a natural parameterization, that grows along a profile direction, as described in European Patent Application EP21305671.6. For example, the parameterization of such profile curve may be an arclength parametrization that grows along the profile direction. The concatenation builds the profile curve of the volume extrusion that is the group from the profile curves of its segments, and using the parameterization provided by European Patent Application EP21305671.6 allows to obtain an orientation-coherent parameterization of the profile curve of the volume extrusion.

Iteratively concatenating the respective profile curves comprises iteratively joining the profile curves (i.e. one by one) to form a single profile curve which is that of the respective group. The iterative concatenating comprises concatenating two by two the profile curves, i.e. concatenating pairs of profile curves, where for each pair of profile curves, the profile curves are concatenated if a third disparity between the respective profile curves of the pair is smaller than a third predefined threshold. The third disparity may be any function, such as a distance, that vanishes when the respective profile curves can be concatenated (e.g. when they can be joined using their extremal points).

The third predefined threshold may be defined by a user, *e.g.* beforehand, at an initial stage of the method. When the CAD 3D object is measured (*e.g.* scanned as previously discussed), the third predefined threshold may be defined with respect to a noise associated with the measurement, *e.g.* the third predefined threshold may be proportional or substantially proportional to the noise. This provides robustness to noise.

Concatenating two respective profile curves may comprise merging an ending point of one of the profile curves with a starting point of the other profile curve, *i.e.* forming one profile curve by joining the ending point of one curve with the starting point of the other curve. In such a case, the third disparity between the respective profile curves may be a distance between the ending point and the starting point. The distance may be of the type:

$$d(\gamma_1, \gamma_2) = |\gamma_1^+ - \gamma_2^-|,$$

where |.| is a Euclidean norm in a profile plane of the respective group, $\gamma_1$ and $\gamma_2$ are the respective profile curves, $\gamma_1^+$ is the ending point of $\gamma_1$, and $\gamma_2^-$ is the starting point of $\gamma_2$.

An implementation of the building of the profile curve is now discussed, and this implementation may be combined with the previously-discussed implementation of the iterative grouping.

This implementation may first apply a parameterization method and a curve fitting method as in previously-cited European Patent Application EP21305671.6, as previously discussed, in order to get approximated profile curves for the segments that are parameterized in a way that is coherent with the orientation of the CAD 3D model.

More precisely, let $\mathcal{P}_e$ be the profile plane of a segment which is an extrusion surface *S'* of axis $u_e$, and $\Pi_e : \mathbb{R}^3 \longrightarrow \mathcal{P}_e$ the orthogonal projection ($\Pi_e v = v - (v \cdot u_e)u_e$). If

$$\gamma : I \subset \mathbb{R} \longrightarrow \mathcal{P}_e$$

is the computed profile curve, and *f: S' → I* is the (profile) parameter computed on the surface, let $\beta \in \{-1, 1\}$ be the sign of the expression:

$$\left( \Pi_e n_p \times \dot{\gamma}(f(p)) \right) \cdot u_e \quad \forall p \in S'.$$

This implementation requires that $\beta$ stays constant.

If *I = [a, b],* then let $\gamma^- = \gamma(a)$ be the starting point of the profile and $\gamma^+ = y(b)$ the end point of the profile. Let

$$x \in \mathcal{P}_e. \, c_{\gamma,x}^+ : I \to \mathcal{P}_e$$

is said to be a change of end point of $\gamma$ with point *x* if $c_{\gamma,x}^+$ is continuous, $c_{\gamma,x}^+(a) = \gamma(a)$, and $c_{\gamma,x}^+(b) = x. \, c_{\gamma,x}^- : I \to \mathcal{P}_e$ is said to be a change of starting point of y with point *x* if $c_{\gamma,x}^-$ is continuous, $c_{\gamma,x}^-(b) = \gamma(b)$, and $c_{\gamma,x}^-(a) = x$. For instance, one can consider $c_{\gamma,x}^+ : t \mapsto tx +$ (1 - t)y(t) and $c_{\gamma,x}^- : t \mapsto (1-t)x + t\gamma(t)$.

Let $\gamma_1 : I_1 = [a_1 \, b_1] \to P_e$ and $\gamma_2 : I_2 = [a_2, b_2] \to P_e$ be two curves such that $\gamma_1^+ = \gamma_2^-$. Let $\gamma_1 * \gamma_2$ be the curve:

$$\gamma_1 * \gamma_2: \left| \begin{aligned} I_{1,2} &\longrightarrow \mathcal{P}_e \\ t &\longmapsto \begin{cases} \gamma_1(t - b_1) & \text{if } t < 0 \\ \gamma_2(t - a_2) & \text{if } t \geq 0 \end{cases} \end{aligned} \right.$$

where $I_{1,2} = [-(b_1 - a_1), b_2 - a_2]$.

Now if the hypothesis that $\gamma_1^+ = \gamma_2^-$, is dropped, one can define $C(\gamma_1, \gamma_2)$ as:

$$\mathcal{C}(\gamma_1, \gamma_2) = c_{\gamma_1, x_{mid}}^+ * c_{\gamma_2, x_{mid}}^-,$$

where $x_{mid} = \frac{1}{2}(\gamma_1^+ + \gamma_2^-)$. Let also

$$d(\gamma_1, \gamma_2) = |\gamma_1^+ - \gamma_2^-|,$$

be the (non-symmetrical) distance between curves extremities, where $|\cdot|$ is the Euclidian norm in $\mathcal{P}_e$.

If an extrusion part S' *(i.e.* a segment that is an extrusion surface) is an aggregation of several elementary extrusion parts $\left(S_{i_1}^{el}, \cdots, S_{i_m}^{el}\right)$ *(i.e.* an group of segments that are extrusion surfaces), with respective profile curves $(\gamma_{i_1}, \ldots, \gamma_{i_m})$ in the profile plane of S', this implementation builds the profile curve of the aggregation by concatenating the respective profile curves for instance using the following algorithm:

For a chosen starting

$$k \in [\![1, m]\!]$$

- $\gamma \leftarrow \gamma_{i_k}$, $Ind = \{1, \cdots, m\} \setminus \{k\}$ and $El \leftarrow \{k\}$
- While $Ind \neq \emptyset$ :
  - Pick $l \in Ind$
  - $Ind \leftarrow Ind \setminus \{l\}$
  - If $d(\gamma, \gamma_{i_l}) \leq \epsilon'$:
    - $\gamma \leftarrow \mathcal{C}(\gamma, \gamma_{i_l})$, $El \leftarrow El \cup \{l\}$
  - If $d(\gamma_{i_l}, \gamma) \leq \epsilon'$:
    - $\gamma \leftarrow \mathcal{C}(\gamma_{i_l}, \gamma)$, $El \leftarrow El \cup \{l\}$
  - If $\gamma$ is closed ($\gamma^+ = \gamma^-$):

    - Break

This algorithm may be ran for every $\in [\![1, m]\!]$, and may build m aggregated curves, some of which will be the same or very similar and may be identified. The tolerance $\epsilon'$ is chosen rather small (e.g. $1.10^{-3}$ for good meshes).

For each respective group, determining the CAD volume extrusion operator corresponding to the respective group may further include determining an extrusion type of the CAD volume extrusion operator based on the built profile curve. The type of the CAD volume extrusion operator may be a pad operator, which corresponds to an addition of material by sliding the profile curve along the extrusion axis of the group (*i.e.* the extrusion axis common to all the segments of the group) in an outward direction. The type of the CAD volume extrusion operator may alternatively be a pocket operator, which corresponds to a removal of material by sliding the profile curve along the extrusion axis of the group in an inward direction. Yet alternatively, the type of the CAD volume extrusion operator may be an extrusion surface operator, *e.g.* an extrusion surface to be assembled with other surfaces to form a closed surface that delimits a volume. For example, the extrusion surface operator may be a split, that is a cut of a volume in two sides to keep one side, the cut being defined by an extrusion surface (which corresponds to the group in this case). The method obtains the type of the CAD volume extrusion operator by using the profile curve built for the corresponding group, *e.g.* by assessing closeness or non-closeness of the profile curve and a curvature of the profile curve, these characteristics of the curve determining the extrusion type.

Determining the extrusion type may comprise determining whether the profile curve is closed or not and computing a total curvature of the profile curve. In this case, the CAD volume extrusion operator is an extrusion surface *(*e.g. a split operator) if the profile curve is open and the absolute value of the total curvature is strictly smaller than $2\pi$. The CAD volume extrusion operator is a pad operator if the profile curve is closed and the total curvature equals $\beta.2\pi$. The CAD volume extrusion operator is a pocket operator if the profile curve is closed and the total curvature equals $-\beta.2\pi$, where $\beta \in \{-1,1\}$. The number $\beta$ may be that of the previously discussed implementation of the building of the profile curve. The total curvature may be of the type:

$$\kappa_{tot} = \int_I \kappa_\gamma(t)dt$$

where $k_\gamma(t)$ is the algebraic curvature of the curve $\gamma$ at parameter $t$, $t$ being an arclength parameter of an arclength parameterization of the curve $\gamma$ on interval $I$. Using the total curvature allows to take advantage of the orientation of the surface normals to determine the type. For example, an addition of material corresponds to an outwardly directed normal and an removal of material correspond to an inwardly directed normal.

An implementation of the determining of the extrusion type is now discussed. This implementation may be combined with the previously-discussed implementation of the iterative grouping and is combined with the previously-discussed implementation of the building of the profile curve.

For all the curves $\gamma{:}I \to \mathcal{P}_e$ that are obtained via the previously described concatenation, this implementation does the following:

- checking if y is closed ($\gamma^+ = \gamma$) or not;
- computing the total curvature $\kappa_{tot}$ of $\gamma$.

$$\kappa_{tot} = \int_I \kappa_\gamma(t)dt,$$

where $k_\gamma(t)$ is the algebraic curvature of $\gamma$ at parameter $t$.

Because of the parameterization that is coherent with the surface orientation used in the implementation of the building of the profile curve, this implementation verifies whether the following criteria:

- If $\gamma$ is open and $|\kappa_{tot}| < 2\pi$, $\gamma$ is the profile of a split operator,
- If $\gamma$ is closed and $\kappa_{tot} = \beta. 2\pi$, $\gamma$ is the profile of a pad operator, and
- If $\gamma$ is closed and $\kappa_{tot} = -\beta. 2\pi$, $\gamma$ is the profile of a pocket operator.
- Else, $\gamma$ is considered as an invalid profile curve.

Here, $\beta$ is the sign of the previously-discussed expression $(\Pi_e n_p \times \dot{\gamma}(f(p))). u_e$.

Indeed, the total curvature of a simple closed curve (homeomorphic to a circle) is either $2\pi$ or $-2\pi$ depending on the "turning" sense (as discussed in reference M. Berger, B. Gostiaux, Géométrie différentielle : variétés, courbes et surfaces, Presses Universitaires de France, "Turning tangents theorem", which is incorporated herein by reference).

FIG. 3 illustrates the criteria for the pocket and pad cases.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 3 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

**Claims**

1. A computer-implemented method for CAD volume extrusion operator detection in a CAD 3D model representing a mechanical part, the method comprising:

   - providing a segmentation of the CAD 3D model, the CAD 3D model including a skin representing an outer surface of the mechanical part, the segmentation comprising segments each representing a skin portion;
   - iteratively grouping segments, where two segments of a pair of segments are grouped if:

     ○ each segment of the pair is an extrusion surface and a union of the two segments is an extrusion surface having a same extrusion axis as the two segments; or
     ○ each segment of the pair is an extrusion surface and one of the two segments is a closing plane for the other segment; and

   - determining one or more CAD volume extrusion operators, each CAD volume extrusion operator corresponding to a respective group.

2. The method of claim 1, wherein iteratively grouping segments comprises one or more iterations of:

- exploring a pair of segments;
- determining whether:

  ◦ a first disparity between the value of an extrusion-detection objective function for the union of the segments of the explored pair and a weighted sum of the values of the extrusion-detection objective function for the segments of the explored pair is lower than a first predefined threshold, the sum being weighted based on the areas of the segments, or
  ◦ a second disparity between the value of an extrusion-closing objective function for the segments of the explored pair and the weighted sum is lower than a second predefined threshold, the extrusion-closing objection function rewarding orthogonality of an input segment with respect to an extrusion axis of another input segment;

- grouping the segments of the explored pair if the first disparity is lower than the first predefined threshold or if the second disparity is lower than the second predefined threshold.

3. The method of claim 2, wherein

- the value of the extrusion-detection objective function for an input segment is a smallest eigenvalue of a normal matrix of the input segment; and/or
- the value of the extrusion-closing objective function is a smallest eigenvalue of a matrix that is a weighted sum of a normal matrix of the other input segment and the identity minus a normal matrix of the input segment, the sum being weighted based on the areas of the input segments.

4. The method of claim 3, wherein:

- the first disparity is of the type:

$$\delta(S_1, S_2) = \lambda_{S_1 \sqcup S_2}^m - \frac{\mathcal{A}_{S_1}}{\mathcal{A}_{S_1} + \mathcal{A}_{S_2}}\lambda_{S_1}^m - \frac{\mathcal{A}_{S_2}}{\mathcal{A}_{S_1} + \mathcal{A}_{S_2}}\lambda_{S_2}^m,$$

where $S_1$ and $S_2$ are the two segments of the explored pair, $\lambda_{S_1 \sqcup S_2}^m$ is the smallest eigenvalue of the normal matrix $T_{S_1 S_2}$ of the union of $S_1$ and $S_2$, $\lambda_{S_1}^m$ is the smallest eigenvalue of the normal matrix $T_{S_1}$ of $S_1$, $\lambda_{S_2}^m$ is the smallest eigenvalue of the normal matrix $T_{S_2}$ of $S_2$, where

$$T_{S_1 \sqcup S_2} = \frac{\mathcal{A}_{S_1}}{\mathcal{A}_{S_1} + \mathcal{A}_{S_2}}T_{S_1} + \frac{\mathcal{A}_{S_2}}{\mathcal{A}_{S_1} + \mathcal{A}_{S_2}}T_{S_2},$$

$\mathcal{A}_{S_1}$ being the area of $S_1$ $\mathcal{A}_{S_2}$ being the area of $S_2$; and/or
- the second disparity is of the type:

$$\delta_\perp(S_1, S_2) = \lambda_{S_1 \perp S_2}^m - \frac{\mathcal{A}_{S_1}}{\mathcal{A}_{S_1} + \mathcal{A}_{S_2}}\lambda_{S_1}^m - \frac{\mathcal{A}_{S_2}}{\mathcal{A}_{S_1} + \mathcal{A}_{S_2}}\lambda_{S_2}^m,$$

where $\lambda_{S_1 \perp S_2}^m$ is the smallest eigenvalue of the matrix

$$\mathbf{T}_{S_1 \perp S_2} = \frac{\mathscr{A}_{S_1}}{\mathscr{A}_{S_1} + \mathscr{A}_{S_2}} \mathbf{T}_{S_1} + \frac{\mathscr{A}_{S_2}}{\mathscr{A}_{S_1} + \mathscr{A}_{S_2}} \left( \mathbf{I} - \mathbf{T}_{S_2} \right)$$

where $S_1$ is the other input segment and $S_2$ is the input segment, $\lambda_{S_1}^m$ is the smallest eigenvalue of the normal matrix $\mathbf{T}_{S_1}$ of $S_1$, and $\lambda_{S_2}^m$ is the smallest eigenvalue of the normal matrix $\mathbf{T}_{S_2}$ of $S_2$.

5. The method of any one of claims 1 to 4, wherein for each respective group, determining the CAD volume extrusion operator corresponding to the respective group includes building a profile curve of the respective group.

6. The method of claim 5, wherein building the profile curve comprises:

   - for each segment of the respective group, providing a respective profile curve of the segment; and
   - iteratively concatenating the respective profile curves, where a pair of respective profile curves are concatenated if a third disparity between the respective profile curves of the pair is smaller than a third predefined threshold.

7. The method of claim 6, wherein concatenating two respective profile curves comprises merging an ending point of one of the profile curves with a starting point of the other profile curve.

8. The method of claim 7, wherein the third disparity between the respective profile curves is a distance between the ending point and the starting point.

9. The method of claim 8, wherein the distance is of the type:

$$d(\gamma_1, \gamma_2) = |\gamma_1^+ - \gamma_2^-|,$$

where $|\cdot|$ is a Euclidean norm in a profile plane of the respective group, $\gamma_1$ and $\gamma_2$ are the respective profile curves, $\gamma_1^+$ is the ending point of $\gamma_1$, and $\gamma_2^-$ is the starting point of $\gamma_2$.

10. The method of any one of claims 5 to 9, wherein for each respective group, determining the CAD volume extrusion operator corresponding to the respective group further includes determining an extrusion type of the CAD volume extrusion operator based on the built profile curve.

11. The method of claim 10, wherein determining the extrusion type comprises:

    - determining whether the profile curve is closed or not; and
    - computing a total curvature of the profile curve,

    where:

    - the CAD volume extrusion operator is an extrusion surface if the profile curve is open and the absolute value of the total curvature is strictly smaller than $2\pi$,
    - the CAD volume extrusion operator is a pad operator if the profile curve is closed and the total curvature equals $\beta 2\pi$, and
    - the CAD volume extrusion operator is a pocket operator if the profile curve is closed and the total curvature equals $-\beta 2\pi$,

    where $\beta \in \{-1,1\}$.

12. The method of claim 11, wherein the total curvature is of the type:

$$\kappa_{tot} = \int_I \kappa_\gamma(t)dt$$

where $k_\gamma(t)$ is the algebraic curvature of the curve y at parameter $t$.

**13.** A computer program comprising instructions for performing the method of any one of claims 1 to 12.

**14.** A computer-readable data storage medium having recorded thereon the computer program of claim 13.

**15.** A computer system comprising a processor coupled to a memory, the memory having recorded thereon the computer program of claim 13.

| PAD | POCKET | SPLIT |

## FIG. 1

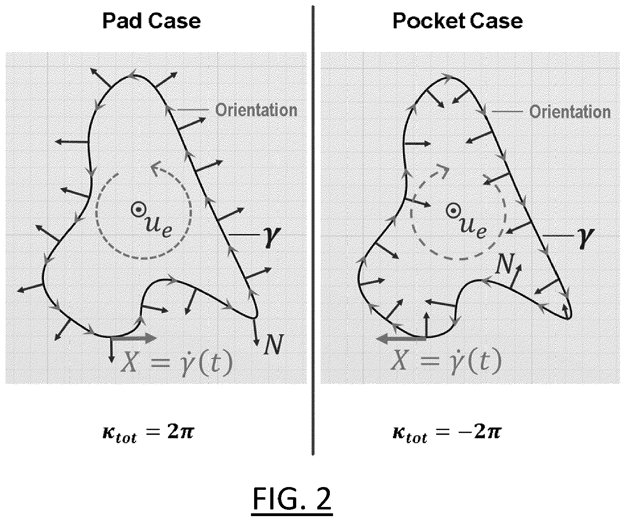

FIG. 2

FIG. 3

Europäisches
Patentamt

European
Patent Office

Office européen
des brevets

## EUROPEAN SEARCH REPORT

**Application Number**

EP 21 30 6184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/151286 A1 (WILLIS KARL DARCY DANIEL [US] ET AL) 14 May 2020 (2020-05-14) * paragraphs [0003], [0020], [0135], [0147], [0159], [0188]; claim 1 * * paragraphs [0148] - [0150] * * paragraph [0212] * * the whole document * ----- | 1-15 | INV. G06F30/10 G06T7/62 G06T17/05 G06T19/20 G06V10/44 G06V20/64 G06V30/422 |
| X | Boussuge Flavien ET AL: "Idealized Models for FEA Derived from Generative Modeling Processes Based on Extrusion Primitives", Engineering with Computers, 22 January 2015 (2015-01-22), pages 513-527, XP055887737, DOI: 10.1007/978-3-319-02335-9_8 Retrieved from the Internet: URL:https://hal.inria.fr/hal-01108462/document [retrieved on 2022-02-04] * abstract * * figures 2,3,8,10 * * page 5, left-hand column, paragraph 1 - right-hand column, paragraph 2 * * page 11, right-hand column, paragraph 2 * * page 12, right-hand column, paragraph 1 * * the whole document * ----- -/-- | 1-15 | |
| | | | **TECHNICAL FIELDS SEARCHED (IPC)** G06F G06T G06K G06V |

The present search report has been drawn up for all claims

| Place of search | Date of completion of the search | Examiner |
|---|---|---|
| Munich | 4 February 2022 | Dapp, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**page 1 of 2**

## EUROPEAN SEARCH REPORT

**Application Number**

EP 21 30 6184

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOUSSUGE FLAVIEN ET AL: "Extraction of generative processes from B-Rep shapes and application to idealization transformations", COMPUTER-AIDED DESIGN, ELSEVIER PUBLISHERS BV., BARKING, GB, vol. 46, 30 August 2013 (2013-08-30), pages 79-89, XP028767020, ISSN: 0010-4485, DOI: 10.1016/J.CAD.2013.08.020 \* abstract \* \* figures 1,2,5,6 \* \* page 3, left-hand column, last paragraph – right-hand column, paragraph 1 \* \* section 3.2 \* \* page 7, left-hand column, paragraph 2 \* \* section 5.2 \* \* the whole document \* ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 4 February 2022 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6184

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2022

| Patent document cited in search report | | Publication date | Patent family member(s) | | Publication date |
|---|---|---|---|---|---|
| US 2020151286 | A1 | 14-05-2020 | CN | 113366481 A | 07-09-2021 |
| | | | EP | 3877889 A2 | 15-09-2021 |
| | | | US | 2020151286 A1 | 14-05-2020 |
| | | | WO | 2020097578 A2 | 14-05-2020 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21305195
- EP 21305293
- EP 21305673
- EP 21305671

**Non-patent literature cited in the description**

- Turning tangents theorem. **M. BERGER ; B. GOS-TIAUX.** Géométrie différentielle : variétés, courbes et surfaces. Presses Universitaires de France